# EUROPÄISCHE PATENTSCHRIFT

(11) **EP 3 240 287 B1**
(45) Veröffentlichungstag und Bekanntmachung des Hinweises auf die Patenterteilung: **06.11.2019**
(21) Anmeldenummer: 17167456.7
(22) Anmeldetag: 21.04.2017
(51) Int. Cl.: H04N 7/18, G08G 1/0962, B60K 35/00, B60R 1/10, B60R 1/00

(54) **ANORDNUNG FÜR EIN KRAFTFAHRZEUG MIT EINER KAMERA UND EINEM DISPLAY**
ASSEMBLY FOR A MOTOR VEHICLE, MOTOR VEHICLE WITH A CAMERA AND A DISPLAY
AGENCEMENT POUR UN VÉHICULE AUTOMOBILE DOTÉ D'UNE CAMÉRA ET D'UN ÉCRAN

(30) Priorität: 30.04.2016 DE 102016005284
(43) Veröffentlichungstag der Anmeldung: 01.11.2017
(73) Patentinhaber: MAN Truck & Bus SE, 80995 München (DE)
(72) Erfinder: Freier, Wolfgang, 09122 Chemnitz (DE); Dill, Ingo, 09573 Leubsdorf (DE); John, Karl, 09387 Jahnsdorf (DE)
(74) Vertreter: v. Bezold & Partner Patentanwälte - PartG mbB

(56) Entgegenhaltungen:
- DE-A1-102012 024 289
- KR-B1- 100 645 986
- US-A- 5 680 123

## Beschreibung

Die Erfindung betrifft eine Anordnung für ein Kraftfahrzeug, vorzugsweise zur Unterstützung eines Kraftfahrzeug-Führers bei einem Abbiegevorgang, insbesondere zur Vermeidung von Unfällen mit einem Fußgänger oder Fahrradfahrer, mit einer Kamera, einem Display zum Anzeigen von mittels der Kamera erfasster Informationen und einer Steuereinrichtung zum zweckmäßigen Steuern der Kamera und/oder des Displays. Die Erfindung betrifft ferner ein zugehöriges Verfahren.

Als Stand der Technik können zunächst die DE 10 2012 024289 A1, die US 5 680 123 A und die KR 100 645 986 B1 genannt werden. DE 10 2012 014 467 A1 offenbart eine Steuerung des Betriebes eines Kamerasystems für ein Fahrzeug, umfassend folgende Schritte: Betätigen eines Bedienelements des Fahrzeugs, wobei eine Aktivierung einer Zündung des Fahrzeugs unabhängig von einer Betätigung des Bedienelements ist. Aktivieren des Kamerasystems abhängig von der Betätigung des Bedienelements, um ein aktuelles Bild aus dem Umfeld des Fahrzeugs auf einem Bildschirm darzustellen. Aktivieren eines Zeitgebers abhängig von der Betätigung des Bedienelements. Bei einem Ablaufen des Zeitgebers nach einem vorbestimmten Zeitintervall wird das Kamerasystem deaktiviert. Im Stand der Technik sind bereits Anordnungen zur Unterstützung eines Kraftfahrzeug-Führers bei einem Abbiegevorgang und zur Vermeidung von Unfällen mit einem Fußgänger oder Fahrradfahrer bekannt. Derartige Anordnung umfassen meist eine Abbiegekamera zur Erfassung einer Seitenumgebung des Kraftfahrzeugs und ein Display zum Anzeigen von mittels der Abbiegekamera erfasster bildlicher Informationen. Dabei sind die Abbiegekameras und zugehörigen Displays üblicherweise dauerhaft eingeschaltet, was z. B. zu einer Ablenkung der Kraftfahrzeug-Führer außerhalb eines Abbiegevorgangs führen kann, zumindest aber zu einem hohen Energieverbrauch. Zudem bringt ein dauerhaft eingeschaltetes Display die Gefahr mit sich, dass im entscheidenden Moment eines Abbiegevorgangs der Kraftfahrzeug-Führer das Display und somit potentielle Gefahren beim Abbiegevorgang unberücksichtigt lässt.

Eine Aufgabe der Erfindung ist es, eine sicherere und/oder energieeffizientere Anordnung mit einer Kamera und zugehörigem Display zu schaffen.

Diese Aufgabe kann mit den Merkmalen der unabhängigen Ansprüche gelöst werden. Vorteilhafte Weiterbildungen der Erfindung können den Unteransprüchen und der folgenden Beschreibung bevorzugter Ausführungsformen der Erfindung entnommen werden.

Die Erfindung schafft eine Anordnung für ein Kraftfahrzeug, vorzugsweise ein Nutzfahrzeug, z. B. einen Lastkraftwagen oder einen Omnibus. Das Kraftfahrzeug kann allerdings auch z. B. ein Personenkraftwagen sein.

Die Anordnung dient vorzugsweise zur Unterstützung eines Kraftfahrzeug-Führers bei einem Abbiegevorgang, insbesondere einem Rechtsabbiegevorgang, und/oder insbesondere zur Vermeidung von Unfällen mit einem Fußgänger oder Fahrradfahrer.

Die Anordnung umfasst eine Kamera (z. B. Bildaufnahmeeinrichtung), ein Display (z. B. eine Anzeigeeinrichtung, Monitor etc.) zum Anzeigen von mittels der Kamera erfasster zweckmäßig bildlicher Informationen und eine Steuereinrichtung, zweckmäßig zum Steuern der Kamera und/oder des Displays.

Die Kamera ist z. B. eine Seiten- oder Abbiegekamera und wird deshalb nachfolgend beispielhaft als Abbiegekamera bezeichnet. Die Seiten- oder Abbiegekamera dient insbesondere zur Erfassung einer Seitenumgebung des Kraftfahrzeugs, z. B. eine relativ zu einem Kraftfahrzeug-Führer und/oder relativ zu einem Fahrersitz für den Kraftfahrzeug-Führer rückwärtige Seitenumgebung, z. B. inklusive einem Totwinkelbereich eines vorzugsweise rechten Außenspiegels des Kraftfahrzeugs und/oder eines rückwärtigen Fahrbahnrandes.

Die Anordnung zeichnet sich dadurch aus, dass die Steuereinrichtung zum automatisierten Ein- und Ausschalten der Abbiegekamera und des Displays eine Fahrgeschwindigkeit des Kraftfahrzeugs undoder eine Blinkeraktivität zur Anzeige einer zweckmäßig vorhandenen oder beabsichtigten Fahrtrichtungsänderung des Kraftfahrzeugs auswertet, so dass insbesondere in Abhängigkeit der Fahrgeschwindigkeit und/oder der Blinkeraktivität die Abbiegekamera und/oder das Display eingeschaltet und ausgeschaltet werden kann.

Dadurch kann insbesondere das Ein- und Ausschalten der Abbiegekamera und des Displays, also insbesondere der bildgebende Vorgang der Anordnung, automatisiert werden. Das Einschalten der Abbiegekamera und/oder des Displays kann somit automatisiert auf Fahrsituationen beschränkt werden, in denen ein Abbiegevorgang stattfindet oder zumindest vermutlich stattfinden wird.

Dadurch kann vorzugsweise der Energieverbrauch der Abbiegekamera und/oder des Displays reduziert werden, eine unnötige Ablenkung des Kraftfahrzeug-Führers durch ein unter dem Gesichtspunkt der Abbiege-Sicherheit unnötig eingeschaltetes Display vermieden werden und der Kraftfahrzeug-Führer durch das automatische Einschalten des Displays auf das Display und somit potentielle Gefahren bei einem Abbiegevorgang gezielt aufmerksam gemacht werden.

Es ist möglich, dass die Steuereinrichtung dafür sorgt, dass die Kamera und/oder das Display in einem ersten vorbestimmten Geschwindigkeitsbereich (z. B. in einem Geschwindigkeitsbereich von im Wesentlichen 0 bis im Wesentlichen 15 km/h, oder kleiner 15 km/h, etc.) eingeschaltet wird und/oder bleibt. Alternativ oder ergänzend kann die Steuereinrichtung dafür sorgen, dass die Kamera und/oder das Display in einem zweiten vorbestimmten Geschwindigkeitsbereich (z. B. über im Wesentlichen 15 km/h, oder über im Wesentlichen 15 km/h und 200 km/h) ausgeschaltet wird und/oder bleibt. Dadurch kann die Steuereinrichtung z. B. dafür sorgen, dass die Abbiegekamera und/oder das Display bis zu einer vorbestimmten zweckmäßig oberen Grenzgeschwindigkeit eingeschaltet wird und/oder bleibt und alternativ oder ergänzend dafür sorgen, dass die Abbiegekamera und/oder das Display ab einer vorbestimmten zweckmäßig oberen Grenzgeschwindigkeit ausgeschaltet wird und/oder bleibt.

Der zweite Geschwindigkeitsbereich kann insbesondere höhere Geschwindigkeiten umfassen als der erste Geschwindigkeitsbereich.

Es ist möglich, dass die Steuereinrichtung dafür sorgt, dass bei aktivierter (z. B. gesetzter) Blinkeraktivität zur Anzeige einer zweckmäßig vorhandenen oder beabsichtigten Fahrtrichtungsänderung des Kraftfahrzeugs nach rechts die Abbiegekamera und/oder das Display eingeschaltet wird und/oder bleibt.

Die Steuereinrichtung kann z. B. dafür sorgen, dass bei aktivierter (z. B. gesetzter) Blinkeraktivität zur Anzeige einer zweckmäßig vorhandenen oder zumindest beabsichtigten Fahrtrichtungsänderung des Kraftfahrzeugs nach links die Abbiegekamera und/oder das Display ausgeschaltet wird und/oder bleibt.

Die Steuereinrichtung kann z. B. ein internes Relais aufweisen, mit zumindest einem nach außen geführten Umschaltkontakt zum Ein- und Ausschalten der Abbiegekamera und/oder des Displays. Alternativ oder ergänzend kann die Steuereinrichtung z. B. zumindest einen nach außen geführten Anschluss zum Anschließen zumindest eines externen Relais zum Ein- und Ausschalten der Abbiegekamera und/oder des Displays aufweisen.

Es ist ebenfalls möglich, dass die Steuereinrichtung zumindest einen nach außen geführten Anschluss zum Empfangen von Informationen über die Fahrgeschwindigkeit und/oder die Blinkeraktivität des Kraftfahrzeugs aufweist. Zu diesem Zweck kann die Steuereinrichtung z. B. mit einer Blinkereinrichtung und/oder einer Einrichtung, aus der sich die Fahrgeschwindigkeit des Kraftfahrzeugs ergibt, in Verbindung stehen.

Die Steuereinrichtung kann ferner insbesondere für zumindest eines von folgenden sorgen:
- dass bei stehendem Kraftfahrzeug (z. B. 0 km/h) und keiner Blinkeraktivität zur Anzeige einer Fahrtrichtungsänderung des Kraftfahrzeugs nach rechts die Abbiegekamera und/oder das Display ausgeschaltet wird und/oder bleibt,
- dass bei stehendem Kraftfahrzeug (z. B. 0 km/h) und einer Blinkeraktivität zur Anzeige einer Fahrtrichtungsänderung des Kraftfahrzeugs nach rechts die Abbiegekamera und/oder das Display eingeschaltet wird und/oder bleibt,
- dass zwischen einer unteren Grenzgeschwindigkeit (z. B. über 0 km/h oder im Wesentlichen 1 km/h) und einer oberen Grenzgeschwindigkeit (z. B. im Wesentlichen 15 km/h) und keiner Blinkeraktivität zur Anzeige einer Fahrtrichtungsänderung des Kraftfahrzeugs nach rechts die Abbiegekamera und/oder das Display ausgeschaltet wird und/oder bleibt,
- dass zwischen einer unteren Grenzgeschwindigkeit (z. B. über 0 km/h oder im Wesentlichen 1 km/h) und einer oberen Grenzgeschwindigkeit (z. B. im Wesentlichen 15 km/h und einer Blinkeraktivität zur Anzeige einer Fahrtrichtungsänderung des Kraftfahrzeugs nach rechts die Abbiegekamera und/oder das Display eingeschaltet wird und/oder bleibt,
- dass über einer oberen Grenzgeschwindigkeit (z. B. im Wesentlichen 15 km) die Abbiegekamera und/oder das Display stets ausgeschaltet wird und/oder bleibt und zwar und unabhängig von der Blinkeraktivität zur Anzeige einer Fahrtrichtungsänderung des Kraftfahrzeugs,
- dass bei einer Blinkeraktivität zur Anzeige einer Fahrtrichtungsänderung des Kraftfahrzeugs nach links die Abbiegekamera und/oder das Display stets ausgeschaltet wird und/oder bleibt, und/oder
   dass bei einer Warnblinkeraktivität des Kraftfahrzeugs die Abbiegekamera und/oder das Display ausgeschaltet wird und/oder bleibt.

Zu erwähnen ist, dass im Rahmen der Erfindung das Merkmal Relais breit auszulegen ist und vorzugsweise auch allgemein ein Schaltelement umfassen kann.

Zu erwähnen ist ferner, dass die Blinkeraktivität zweckmäßig von einem Fahrtrichtungsanzeiger, insbesondere einer Blinkereinrichtung, ausführbar ist.

Zu erwähnen ist noch, dass die Kamera vorzugweise einen relativ zum Kraftfahrzeug-Führer und/oder Fahrersitz für einen Kraftfahrzeug-Führer rückwärtige Seitenumgebung erfassen kann.

Die Steuereinrichtung kann z. B. mehrere separate Steuereinheiten oder nur eine Steuereinheit umfassen.

Zu erwähnen ist außerdem, dass die Steuereinrichtung zum Ein- und Ausschalten der Abbiegekamera und/oder des Displays z. B. ein Tachometer-Signal des Kraftfahrzeugs auswerten kann. Hierzu können aber auch z. B. ein Drehzahlmess-Signal (z. B. einer Kraftfahrzeugachse, eines Kraftfahrzeugrads etc.) herangezogen werden.

Die Erfindung umfasst ebenfalls ein Kraftfahrzeug, z. B. ein Nutzfahrzeug, zweckmäßig einen Lastkraftwagen oder einen Omnibus, mit einer Anordnung, wie hierin offenbart. Das Kraftfahrzeug kann allerdings auch ein Personenkraftwagen sein.

Die Erfindung umfasst ebenfalls ein Verfahren für insbesondere eine wie hierin offenbarte Anordnung und somit zweckmäßig zur Unterstützung eines Kraftfahrzeug-Führers bei einem Abbiegevorgang, und/oder zur Vermeidung von Unfällen mit einem Fußgänger oder Fahrradfahrer.

Die Anordnung umfasst demnach eine Kamera (z. B. Bildaufnahmeeinrichtung), ein Display (z. B. eine Anzeigeeinrichtung, Monitor etc.) zum Anzeigen von mittels der Kamera erfasster zweckmäßig bildlicher Informationen und eine Steuereinrichtung, zweckmäßig zum Steuern der Kamera und/oder des Displays.

Das Verfahren zeichnet sich dadurch aus, dass die Steuereinrichtung zum Ein- und Ausschalten der Kamera und des Displays eine Fahrgeschwindigkeit des Kraftfahrzeuges und/oder eine Blinkeraktivität zur Anzeige einer zweckmäßig vorhandenen oder zumindest beabsichtigten Fahrtrichtungsänderung des Kraftfahrzeugs auswertet, so dass in Abhängigkeit der Fahrgeschwindigkeit und/oder der Blinkeraktivität die Kamera und das Display zweckmäßig eingeschaltet und ausgeschaltet werden kann.

Die vorstehend beschriebenen bevorzugten Ausführungsformen und Merkmale der Erfindung sind miteinander kombinierbar und gelten insbesondere sowohl für die Anordnung als auch das Verfahren. Andere vorteilhafte Weiterbildungen der Erfindung sind in den Unteransprüchen offenbart oder ergeben sich aus der vorliegenden Beschreibung bevorzugter Ausführungsformen der Erfindung in Verbindung mit der beigefügten Figur.

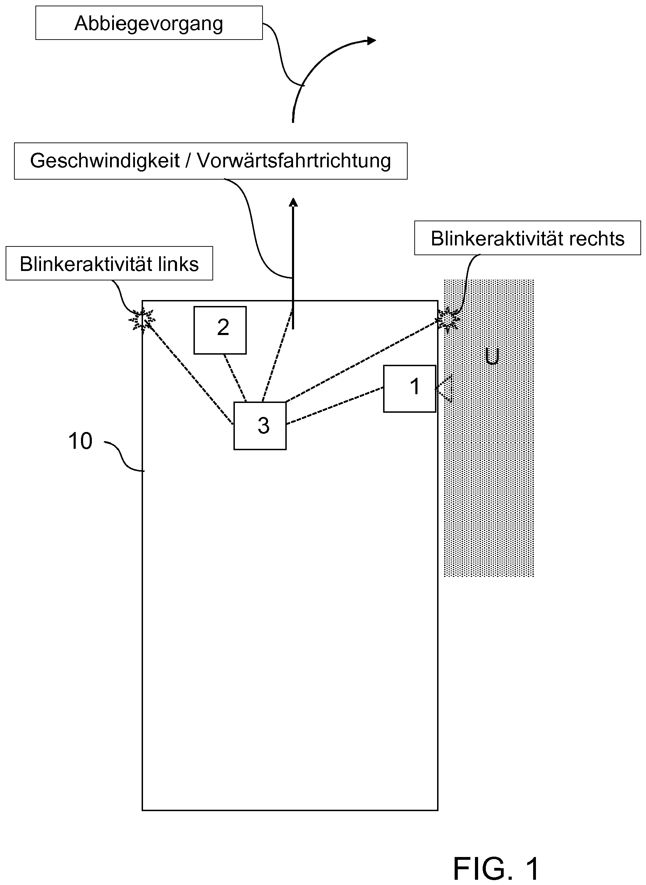

- Figur 1: zeigt eine stark schematische Ansicht einer Anordnung für ein Kraftfahrzeug gemäß einer Ausführungsform der Erfindung.

Figur 1 zeigt eine stark schematische Anordnung für ein Kraftfahrzeug 10. Die Anordnung dient insbesondere zur Unterstützung eines Kraftfahrzeug-Führers bei einem Abbiegevorgang und somit zur Vermeidung von Unfällen mit einem Fußgänger oder Fahrradfahrer.

Die Anordnung umfasst eine Kamera 1, z. B. eine Abbiege-/Seitenkamera zur Erfassung, zweckmäßig Aufnahme einer Seitenumgebung U des Kraftfahrzeugs 10, ein Display 2 zum Anzeigen von mittels der Abbiegekamera 1 erfasster, zweckmäßig bildlicher Informationen der Seitenumgebung U und eine Steuereinrichtung 3 zum Steuern der Abbiegekamera 1 und des Displays 2. Der in Figur 1 gezeigte gerade Pfeil soll einerseits die Vorwärtsfahrtrichtung und andererseits die Geschwindigkeit des Kraftfahrzeugs 10 symbolisieren. Der in Figur 1 gezeigte gekrümmte Pfeil soll einen Abbiegevorgang des Kraftfahrzeugs symbolisieren.

Die Seitenumgebung U kann zweckmäßig eine relativ zum Kraftfahrzeug-Führer und/oder relativ zum Fahrersitz für den Kraftfahrzeug-Führer rückwärtige Seitenumgebung U erfassen, z. B. inklusive einem Totwinkelbereich des rechten Außenspiegels des Kraftfahrzeugs 10 und/oder inklusive eines rückwärtigen Fahrbahnrandes.

Die Steuereinrichtung 3 ist so konfiguriert, dass sie zum automatisierten Ein- und Ausschalten der Abbiegekamera 1 und des Displays 2 eine Fahrgeschwindigkeit des Kraftfahrzeugs, insbesondere ein Tacho-Signal, und eine Blinkeraktivität einer Blinkereinrichtung zur Anzeige einer zweckmäßig vorhandenen oder zumindest beabsichtigten Fahrtrichtungsänderung des Kraftfahrzeugs 10 auswertet, so dass in Abhängigkeit der Fahrgeschwindigkeit und der Blinkeraktivität die Abbiegekamera 1 und das Display 2 eingeschaltet bzw. ausgeschaltet werden können.

Die Steuereinrichtung 3 kann insbesondere dafür sorgen, dass die Abbiegekamera 1 und das Display 2 bis zu einer vorbestimmten Grenzgeschwindigkeit, z. B. im Bereich von ungefähr 0 bis ungefähr 15 km/h, eingeschaltet wird und/oder bleibt und zweckmäßig ab einer vorbestimmten Grenzgeschwindigkeit, z. B. im Bereich ab ungefähr 15 km/h, ausgeschaltet wird und/oder bleibt.

Die Steuereinrichtung 3 kann ferner dafür sorgen, dass bei aktivierter Blinkeraktivität zur Anzeige einer Fahrtrichtungsänderung des Kraftfahrzeugs 10 nach rechts die Abbiegekamera 1 und das Display 2 eingeschaltet werden und/oder bleiben, hingegen bei aktivierter Blinkeraktivität zur Anzeige einer Fahrtrichtungsänderung des Kraftfahrzeugs 10 nach links die Abbiegekamera 1 und das Display 2 ausgeschaltet werden und/oder bleiben. Somit können z. B. bei gesetztem Blinker nach links die Abbiegekamera 1 und das Display 2 immer ausgeschaltet werden und/oder bleiben oder erst gar nicht eingeschaltet werden.

Die in Figur 1 nur schematisch angedeutete Steuereinrichtung 3 umfasst insbesondere ein internes Relais (z. B. Schaltelement) mit einem nach außen geführten Umschaltkontakt zum Ein- und Ausschalten der Abbiegekamera 1 und einem nach außen geführten Umschaltkontakt zum Ein- und Ausschalten des Displays 2. Die Steuereinrichtung 3 kann allerdings auch einen nach außen geführten Anschluss zum Anschließen eines externen Relais zum Ein- und/oder Ausschalten der Abbiegekamera 1 und einen nach außen geführten Anschluss zum Anschließen eines externen Relais zum Ein- und/oder Ausschalten des Displays 2 umfassen.

Die Steuereinrichtung 3 umfasst außerdem nach außen geführte Anschlüsse zum Empfangen von Informationen über die Fahrgeschwindigkeit und/oder die Blinkeraktivität.

Die Steuereinrichtung 3 kann insbesondere in einem Kunststoffgehäuse, z. B. einem ABS-Kunststoffgehäuse (Acrylnitril-Butadien-Styrol) untergebracht sein. Die zuvor erwähnten Anschlüsse, insbesondere für ein Geschwindigkeitssignal (z. B. Tachosignal), Blinkersignal, für Spannung und/oder Strom und Relaisumschalter sind vorzugsweise über einen z. B. 10-poligen Steckverbinder nach außen geführt. Die Elektronik befindet sich vorzugsweise auf einer Leiterplatte. Die Funktionen der Steuereinrichtung 3 können von einem Mikrocontroller realisiert werden. Die Steuereinrichtung 3 ist vorzugsweise verpolsicher und überspannungssicher ausgeführt.

Durch die Auswertung der Fahrgeschwindigkeit und der Blinkeraktivität kann das Ein- und Ausschalten der Abbiegekamera 1 und des Displays 2 zweckmäßig automatisiert werden und das Einschalten der Abbiegekamera 1 und des Displays 2 auf Fahrsituationen eingegrenzt werden, in denen ein Abbiegevorgang stattfindet oder zumindest vermutlich stattfinden wird. Dadurch kann außerdem der Energieverbrauch der Abbiegekamera 1 und des Displays 2 reduziert werden, eine unnötige Ablenkung des Kraftfahrzeug-Führer durch ein unter dem Gesichtspunkt der Abbiege-Sicherheit unnötig eingeschaltetes Display 2 vermieden werden und der Kraftfahrzeug-Führer durch das automatische Einschalten des Displays 2 gezielt auf das Display 2 und somit potentielle Gefahren bei einem Abbiegevorgang aufmerksam gemacht werden.

Zu erwähnen ist, dass die Figur 1 zuvor für die Ausführungsform beschrieben wurde, dass die Steuereinrichtung 3 zum Ein- und Ausschalten der Abbiegekamera 1 und des Displays 2 eine Fahrgeschwindigkeit des Kraftfahrzeugs und/oder eine Blinkeraktivität auswertet. Im Rahmen der Erfindung sind allerdings auch Ausführungsformen umfasst, in denen die Steuereinrichtung 3 zum Ein- und Ausschalten der Abbiegekamera 1 und/oder des Displays 2 eine Fahrgeschwindigkeit und/oder eine Blinkeraktivität auswertet.

Zu erwähnen ist außerdem, dass die Erfindung ebenfalls ein Verfahren für die hierin beschriebene Anordnung umfasst, so dass die zur Anordnung gemachte Offenbarung entsprechend für das Verfahren gilt.

### Bezugszeichenliste

- 1: Kamera, insbesondere Seiten-/Abbiegekamera
- 2: Display, insbesondere Anzeigeeinrichtung
- 3: Steuereinrichtung
- 10: Kraftfahrzeug
- U: Durch Abbiegekamera umfasster seitlicher Umgebungsbereich

## Patentansprüche

1. Anordnung für ein Kraftfahrzeug (10), vorzugsweise zur Unterstützung eines Kraftfahrzeug-Führers bei einem Abbiegevorgang, insbesondere zur Vermeidung von Unfällen mit einem Fußgänger oder Fahrradfahrer, mit einer Kamera (1), einem Display (2) zum Anzeigen von mittels der Kamera (1) erfasster Informationen und einer Steuereinrichtung (3), **dadurch gekennzeichnet, dass** die Steuereinrichtung (3) zum automatisierten Ein- und Ausschalten der Kamera (1) und des Displays (2) eine Fahrgeschwindigkeit des Kraftfahrzeugs (10) und eine Blinkeraktivität zur Anzeige einer Fahrtrichtungsänderung des Kraftfahrzeugs (10) auswertet.

2. Anordnung nach Anspruch 1, **dadurch gekennzeichnet, dass** die Steuereinrichtung (3) dafür sorgt, dass die Kamera (1) und/oder das Display (2) in einem ersten vorbestimmten Geschwindigkeitsbereich eingeschaltet wird / bleibt.

3. Anordnung nach einem der vorhergehenden Ansprüche, **dadurch gekennzeichnet, dass** die Steuereinrichtung (3) dafür sorgt, dass die Kamera (1) und/oder das Display (2) in einem zweiten vorbestimmten Geschwindigkeitsbereich ausgeschaltet wird / bleibt und vorzugsweise der zweite Geschwindigkeitsbereich höhere Geschwindigkeiten umfasst als der erste Geschwindigkeitsbereich.

4. Anordnung nach einem der vorhergehenden Ansprüche, **dadurch gekennzeichnet, dass** die Steuereinrichtung (3) dafür sorgt, dass bei aktivierter Blinkeraktivität zur Anzeige einer Fahrtrichtungsänderung des Kraftfahrzeugs (10) nach rechts die Kamera (1) und/oder das Display (2) einschaltet wird / bleibt.

5. Anordnung nach einem der vorhergehenden Ansprüche, **dadurch gekennzeichnet, dass** die Steuereinrichtung (3) dafür sorgt, dass bei aktivierter Blinkeraktivität zur Anzeige einer Fahrtrichtungsänderung des Kraftfahrzeugs (10) nach links die Kamera (1) und/oder das Display (2) ausgeschaltet wird / bleibt.

6. Anordnung nach einem der vorhergehenden Ansprüche, **dadurch gekennzeichnet, dass** die Steuereinrichtung (3) ein internes Relais aufweist, mit zumindest einem nach außen geführten Umschaltkontakt zum Ein- und Ausschalten der Kamera (1) und/oder des Displays (2).

7. Anordnung nach einem der vorhergehenden Ansprüche, **dadurch gekennzeichnet, dass** die Steuereinrichtung (3) zumindest einen nach außen geführten Anschluss zum Anschließen zumindest eines externen Relais zum Ein- und Ausschalten der Kamera (1) und/oder des Displays (2) aufweist.

8. Anordnung nach einem der vorhergehenden Ansprüche, **dadurch gekennzeichnet, dass** die Steuereinrichtung (3) zumindest einen nach außen geführten Anschluss zum Empfangen von Informationen über eine Fahrgeschwindigkeit und/oder eine Blinkeraktivität des Kraftfahrzeugs aufweist.

9. Anordnung nach einem der vorhergehenden Ansprüche, **dadurch gekennzeichnet, dass** die Kamera (1) eine Seiten- oder Abbiegekamera zur Erfassung einer Seitenumgebung (U) des Kraftfahrzeugs ist, vorzugsweise eine relativ zu einem Kraftfahrzeug-Führer und/oder relativ zu einem Fahrersitz für den Kraftfahrzeug-Führer rückwärtige Seitenumgebung (U), insbesondere inklusive einem Totwinkelbereich eines Außenspiegels des Kraftfahrzeugs (10) und/oder eines Fahrbahnrandes.

10. Anordnung nach einem der vorhergehenden Ansprüche, **dadurch gekennzeichnet, dass** die Steuereinrichtung (3) für zumindest eines von folgenden sorgt:
- dass bei stehendem Kraftfahrzeug (0 km/h) und keiner Blinkeraktivität zur Anzeige einer Fahrtrichtungsänderung des Kraftfahrzeugs nach rechts die Kamera (1) und/oder das Display (2) ausgeschaltet wird / bleibt,
- dass bei stehendem Kraftfahrzeug und einer Blinkeraktivität zur Anzeige einer Fahrtrichtungsänderung des Kraftfahrzeugs nach rechts die Kamera (1) und/oder das Display (2) eingeschaltet wird / bleibt,
- dass zwischen einer unteren Grenzgeschwindigkeit (über 0 km/h) und einer oberen Grenzgeschwindigkeit und keiner Blinkeraktivität zur Anzeige einer Fahrtrichtungsänderung des Kraftfahrzeugs nach rechts die Kamera (1) und/oder das Display (2) ausgeschaltet wird / bleibt,
- dass zwischen einer unteren Grenzgeschwindigkeit (über 0 km/h) und einer oberen Grenzgeschwindigkeit und einer Blinkeraktivität zur Anzeige einer Fahrtrichtungsänderung des Kraftfahrzeugs nach rechts die Kamera (1) und/oder das Display (2) eingeschaltet wird / bleibt,
- dass über einer oberen Grenzgeschwindigkeit die Kamera (1) und/oder das Display (2) stets ausgeschaltet wird / bleibt und zwar und unabhängig von der Blinkeraktivität zur Anzeige einer Fahrtrichtungsänderung des Kraftfahrzeugs (10),
- dass bei einer Blinkeraktivität zur Anzeige einer Fahrtrichtungsänderung des Kraftfahrzeugs (10) nach links die Kamera (1) und/oder das Display (2) stets ausgeschaltet wird / bleibt,
dass bei einer Warnblinkeraktivität des Kraftfahrzeugs (10) die Kamera (1) und/oder das Display (2) ausgeschaltet wird / bleibt.

11. Kraftfahrzeug (10), mit einer Anordnung nach einem der vorhergehenden Ansprüche.

12. Verfahren für eine Anordnung für ein Kraftfahrzeug (10), vorzugsweise eine Anordnung nach einem der Ansprüche 1 bis 10, wobei die Anordnung eine Kamera (1), ein Display (2) zum Anzeigen von mittels der Kamera (1) erfasster Informationen und eine Steuereinrichtung (3) aufweist, **dadurch gekennzeichnet, dass** die Steuereinrichtung (3) zum automatisierten Ein- und Ausschalten der Kamera (1) und des Displays (2) eine Fahrgeschwindigkeit des Kraftfahrzeugs und eine Blinkeraktivität zur Anzeige einer Fahrtrichtungsänderung des Kraftfahrzeugs (10) auswertet.

## Claims

1. An arrangement for a motor vehicle (10), preferably for assisting a motor vehicle driver in a turning manoeuvre, in particular to avoid accidents with a pedestrian or cyclist, having a camera (1), a display (2) for displaying information captured by means of the camera (1) and a control device (3), **characterized in that** the control device (3) evaluates a speed of travel of the motor vehicle (10) and an indicator activity for indicating a change of direction of travel of the motor vehicle (10) in order to switch the camera (1) and the display (2) on and off in automated fashion.

2. The arrangement according to Claim 1, **characterized in that** the control device (3) ensures that the camera (1) and/or the display (2) is/remains switched on in a first predetermined speed range.

3. The arrangement according to either of the preceding claims, **characterized in that** the control device (3) ensures that the camera (1) and/or the display (2) is/remains switched off in a second predetermined speed range and preferably the second speed range comprises higher speeds than the first speed range.

4. The arrangement according to one of the preceding claims, **characterized in that** the control device (3) ensures that the camera (1) and/or the display (2) is/remains switched on when the indicator activity is activated to indicate a change of direction of travel of the motor vehicle (10) to the right.

5. The arrangement according to one of the preceding claims, **characterized in that** the control device (3) ensures that the camera (1) and/or the display (2) is/remains switched off when the indicator activity is activated to indicate a change of direction of travel of the motor vehicle (10) to the left.

6. The arrangement according to one of the preceding claims, **characterized in that** the control device (3) has an internal relay, having at least one outwardly guided changeover contact for switching the camera (1) and/or the display (2) on and off.

7. The arrangement according to one of the preceding claims, **characterized in that** the control device (3) has at least one outwardly guided connection for connecting at least one external relay for switching the camera (1) and/or the display (2) on and off.

8. The arrangement according to one of the preceding claims, **characterized in that** the control device (3) has at least one outwardly guided connection for receiving information about a speed of travel and/or an indicator activity of the motor vehicle.

9. The arrangement according to one of the preceding claims, **characterized in that** the camera (1) is a side or turning camera for capturing lateral surroundings (U) of the motor vehicle, preferably lateral surroundings (U) to the rear relative to a motor vehicle driver and/or relative to a driver's seat for the motor vehicle driver, in particular including a blind spot region of an exterior mirror of the motor vehicle (10) and/or an edge of the road.

10. The arrangement according to one of the preceding claims, **characterized in that** the control device (3) ensures at least one of the following:
- that the camera (1) and/or the display (2) is/remains switched off when the motor vehicle is stationary (0 km/h) and there is no indicator activity to indicate a change of direction of travel of the motor vehicle to the right,
- that the camera (1) and/or the display (2) is/remains switched on when the motor vehicle is stationary and there is indicator activity to indicate a change of direction of travel of the motor vehicle to the right,
- that the camera (1) and/or the display (2) is/remains switched off between a lower limit speed (above 0 km/h) and an upper limit speed when there is no indicator activity to indicate a change of direction of travel of the motor vehicle to the right,
- that the camera (1) and/or the display (2) is/remains switched on between a lower limit speed (above 0 km/h) and an upper limit speed when there is indicator activity to indicate a change of direction of travel of the motor vehicle to the right,
- that the camera (1) and/or the display (2) always is/remains switched off above an upper limit speed, specifically and independently of the indicator activity to indicate a change of direction of travel of the motor vehicle (10),
- that the camera (1) and/or the display (2) always is/remains switched off when there is indicator activity to indicate a change of direction of travel of the motor vehicle (10) to the left,
- that the camera (1) and/or the display (2) is/remains switched off when there is hazard warning light activity by the motor vehicle (10).

11. A motor vehicle (10), having an arrangement according to one of the preceding claims.

12. A method for an arrangement for a motor vehicle (10), preferably an arrangement according to one of Claims 1 to 10, wherein the arrangement has a camera (1), a display (2) for indicating information captured by means of the camera (1) and a control device (3), **characterized in that** the control device (3) evaluates a speed of travel of the motor vehicle and an indicator activity for indicating a change of direction of travel of the motor vehicle (10) in order to switch the camera (1) and the display (2) on and off in automated fashion.

## Revendications

1. Agencement pour un véhicule automobile (10), de préférence pour assister un conducteur de véhicule automobile lors d'une manœuvre pour tourner, en particulier pour éviter des accidents avec un piéton ou un cycliste, doté d'une caméra (1), d'un écran (2) pour afficher des informations détectées par la caméra (1) et d'un dispositif de commande (3), **caractérisé en ce que** le dispositif de commande (3) évalue pour la mise en marche et la coupure automatisées de la caméra (1) et de l'écran (2) une vitesse de roulage du véhicule automobile (10) et une activité des clignotants pour l'affichage d'un changement de direction de roulage du véhicule automobile (10).

2. Agencement selon la revendication 1, **caractérisé en ce que** le dispositif de commande (3) veille à ce que la caméra (1) et/ou l'écran (2) soit/reste activé(e) dans une première plage de vitesse prédéterminée.

3. Agencement selon l'une quelconque des revendications précédentes, **caractérisé en ce que** le dispositif de commande (3) veille à ce que la caméra (1) et/ou l'écran (2) soit/reste désactivé(e) dans une seconde plage de vitesse prédéterminée et de préférence la seconde plage de vitesse comprend des vitesses plus élevées que la première plage de vitesse.

4. Agencement selon l'une quelconque des revendications précédentes, **caractérisé en ce que** le dispositif de commande (3) veille à ce que, lorsque l'activité des clignotants est activée pour afficher un changement de direction de roulage du véhicule automobile (10) vers la droite, la caméra (1) et/ou l'écran (2) soit/reste activé(e).

5. Agencement selon l'une quelconque des revendications précédentes, **caractérisé en ce que** le dispositif de commande (3) veille à ce que, lorsque l'activité des clignotants est activée pour afficher un changement de direction de roulage du véhicule automobile (10) vers la gauche, la caméra (1) et/ou l'écran (2) soit/reste désactivé(e).

6. Agencement selon l'une quelconque des revendications précédentes, **caractérisé en ce que** le dispositif de commande (3) présente un relais interne, avec au moins un contact de commutation mené vers l'extérieur pour la mise en marche et la coupure de la caméra (1) et/ou de l'écran (2).

7. Agencement selon l'une quelconque des revendications précédentes, **caractérisé en ce que** le dispositif de commande (3) présente au moins un raccord mené vers l'extérieur pour le raccordement d'au moins un relais externe pour la mise en marche et la coupure de la caméra (1) et/ou de l'écran (2).

8. Agencement selon l'une quelconque des revendications précédentes, **caractérisé en ce que** le dispositif de commande (3) présente au moins un raccord mené vers l'extérieur pour la réception d'informations relatives à une vitesse de roulage et/ou une activité des clignotants du véhicule automobile.

9. Agencement selon l'une quelconque des revendications précédentes, **caractérisé en ce que** la caméra (1) est une caméra latérale ou une caméra d'angle pour la détection d'un environnement latéral (U) du véhicule automobile, de préférence un environnement latéral arrière (U) par rapport à un conducteur du véhicule automobile et/ou par rapport à un siège de conducteur pour le conducteur du véhicule automobile, en particulier y compris une zone d'angle mort d'un rétroviseur extérieur du véhicule automobile (10) et/ou d'un bord de chaussée.

10. Agencement selon l'une quelconque des revendications précédentes, **caractérisé en ce que** le dispositif de commande (3) assure au moins un des points suivants:
- lorsque le véhicule automobile est à l'arrêt (0 km/h) et qu'aucune activité des clignotants n'affiche un changement de direction de roulage du véhicule automobile vers la droite, la caméra (1) et/ l'écran (2) est/reste désactivé(e),
- lorsque le véhicule automobile est à l'arrêt et qu'une activité des clignotants affiche un changement de direction de roulage du véhicule automobile vers la droite, la caméra (1) et/ou l'écran (2) est/reste activé(e),
- entre une vitesse limite inférieure (plus de 0 km/h) et une vitesse limite supérieure et sans activité des clignotants pour afficher un changement de direction de roulage du véhicule automobile vers la droite, la caméra (1) et/ou l'écran (2) est/reste désactivé(e),
- entre une vitesse limite inférieure (plus de 0 km/h) et une vitesse limite supérieure et avec une activité des clignotants pour afficher un changement de direction de roulage du véhicule automobile vers la droite, la caméra (1) et/ou l'écran (2) est/reste activé(e),
- au-delà d'une vitesse limite supérieure, la caméra (1) et/ou l'écran (2) est/reste toujours désactivé(e), notamment et indépendamment de l'activité des clignotants pour afficher un changement de direction de roulage du véhicule automobile (10),
- en cas d'activité des clignotants pour afficher un changement de direction de roulage du véhicule automobile (10) vers la gauche, la caméra (1) et/ou l'écran (2) est/reste toujours désactivé(e),
- en cas d'activité d'avertissement des clignotants du véhicule automobile (10), la caméra (1) et/ou l'écran (2) est/reste désactivé(e).

11. Véhicule automobile (10), doté d'un agencement selon l'une quelconque des revendications précédentes.

12. Procédé destiné à un agencement pour un véhicule automobile (10), de préférence un agencement selon l'une quelconque des revendications 1 à 10, dans lequel l'agencement présente une caméra (1), un écran (2) pour afficher des informations détectées au moyen de la caméra (1) et un dispositif de commande (3), **caractérisé en ce que** le dispositif de commande (3) évalue pour la mise en marche et la coupure automatisées de la caméra (1) et de l'écran (2) une vitesse de roulage du véhicule automobile et une activité des clignotants pour l'affichage d'un changement de direction de roulage du véhicule automobile (10) .
